# EUROPÄISCHE PATENTSCHRIFT

(11) **EP 0 756 559 B1**
(45) Veröffentlichungstag und Bekanntmachung des Hinweises auf die Patenterteilung: **09.12.1998**
(21) Anmeldenummer: 96904713.3
(22) Anmeldetag: 20.02.1996
(51) Int. Cl.: B65B 3/34, G05D 7/06

(54) **VERFAHREN ZUM JUSTIEREN EINES FÜLLSTRAHLES**
FILLING STREAM ADJUSTING PROCESS
PROCEDE DE REGLAGE D'UN JET DE REMPLISSAGE

(30) Priorität: 22.02.1995 DE 19507831
(43) Veröffentlichungstag der Anmeldung: 05.02.1997
(73) Patentinhaber: Afuema Abfüllmaschinen GmbH, 06862 Rosslau (DE)
(72) Erfinder: SCHRÖDER, WOLFGANG, 39118 Magdeburg (DE)
(74) Vertreter: Erich, Dieter
(86) Internationale Anmeldenummer: DE9600337
(87) Internationale Veröffentlichungsnummer: WO9626110

(56) Entgegenhaltungen:
- EP-A- 0 426 266
- EP-A- 0 444 269
- WO-A-92/02787
- US-A- 5 316 444

## Beschreibung

Die Erfindung betrifft ein Verfahren zum Justieren des Füllstrahles förderstromgesteuerter, automatisch arbeitender Füllmaschinen, mit denen Flüssigkeiten unterschiedlicher Viskosität sowie Dichte dosiert und mit einem frei verlaufenden, gerichteten Füllstrahl in Gefäße gefüllt werden, wobei die Flüssigkeit mittels einer Füllpumpe in ein Füllrohr gepumpt wird.
Es ist bekannt, Flüssigkeiten unterschiedlicher Viskosität und Dichte mittels volumengesteuerter Füllautomaten zu dosieren und in Behälter einzufüllen. Die US PS 4 460 026 offenbart eine Flüssigkeitsmessung mit einem Flüssigkeitsabfüllgerät, das mehrere Reservoirelemente in bestimmten Positionen aufweist. Die Reservoirelemente sind aus Rumpf- und Halsteilen gebildet und mit einem Behälterauslaßrohr in Verbindung gebracht. Das Verfahren entsprechend der US PS 4 460 026 weist den Nachteil auf, daß Dosier- und Meßvorgänge in einem separaten Teil der Vorrichtung durchgeführt werden und durch Übermittlungsfehler hohe Meßungenauigkeiten zur Folge haben. Ein weiterer, prägnanter Nachteil förderstromgesteuerter Füllautomaten besteht in einem zeitabhängigen Füllprogramm. Die Zeitabhängigkeit des Füllens, d. h. das Voreinstellen der Füllzeit, unabhängig von der Viskosität und Dichte sowie deren beim Abfüllprozeß auftretenden Veränderungen, führen zu bedeutenden Dosierfehlern, die entweder über eine ständige Nachjustierung der Füllzeit korrigiert werden müssen oder zu einem nachträglichen Auffüllen der Gefäße führen. Ist der Dosier- und Meßvorgang einmal unterbrochen, ist eine nachträgliche Justierung des Zeitprogramms erforderlich, bis die erforderliche Menge eingestellt worden ist. Die DD PS 297 123 offenbart eine Sensoranordnung, bei der die Sensoren am Füllrohr in solchen Abständen angeordnet sind, daß eine Messung des Grundvolumens vorgenommen werden kann. Die Auswertung der Laufzeitdifferenz wird zur Kompensation von Viskositätseinflüssen genutzt. Ein Nachteil der zur Durchführung des Verfahrens gelangenden Anordnung besteht darin, daß die Geschwindigkeit der einzufüllenden Medien, in der Anordnung abhängig von der Viskosität und dem Schergefälle, große Unterschiede aufweisen kann. Bei einer zu großen Geschwindigkeit des Austritts des Füllstrahles aus dem Füllrohr trifft dieser nicht in die Gefäßöffnung, sondern er geht darüber hinaus. Ist die Geschwindigkeit zu gering, klappt der Füllstrahl am Füllrohr ab, und das Medium läuft am Füllrohr bzw. am Behälter herunter. Ein weiterer Nachteil dieser Anordnung besteht darin, daß die für eine gleichmäßige Dosierung notwendige Überlaufanordnung nicht kontinuierlich gefüllt wird und Dosierfehler zur folge hat. Der Anordnung der DD PS 297 123 ist ein weiterer Nachteil eigen, welcher darin zu sehen ist, daß nach Beendigung des Füllvorganges die Pumpenmotore abgeschaltet werden, wodurch das Medium in eine Ruhelage gerät und seine Viskosität verändert. Beim Wiederanlaufen der Pumpenmotoren und bei einem Neubeginn der Dosierung sind umfangreiche Justierarbeiten notwendig, um eine kontinuierliche Dosiergenauigkeit zu erreichen.

Der Erfindung liegt die Aufgabe zu Grunde, ein Verfahren gemäß dem Oberbegriff des Patentanspruchs 1, bzw. des Patentanspruchs 4 zu schaffen, mit dem eine gleichmäßige, saubere Zuführung des Volumenstromes des Mediums über das Füllrohr in die als Gebinde bereitgestellten Gefäße erzielt wird.

Die Aufgabe wird erfindungsgemäß durch die Merkmale der Ansprüche 1 und 4 gelöst

Erfindungsgemäß wird die Aufgabe dadurch gelöst, daß die Geschwindigkeit des aus dem Füllrohr austretenden Flüssigkeitsstrahles als Sollwert festgelegt und in einem Rechner gespeichert wird. Mit den so gespeicherten Sollwerten werden die Ist-Werte der Geschwindigkeit eines aus einer Pumpe ausgetretenen Volumenstromes zur Justierung der Geschwindigkeit des im Bereich eines äußeren Volumensensors aus dem Füllrohr austretenden Füllstrahles einem Vergleich unterzogen. Die Feststellung der Ist-Werte des Volumenstromes erfolgt mittels Geschwindigkeitssensoren, die vor inneren Geschwindigkeitssensoren angeordnet, den Pumpen jedoch nachgeordnet sind.Die Förderleistung der jeweiligen Pumpe wird so lange verändert, bis die Größe des gespeicherten Sollwertes der Geschwindigkeit des Füllstrahles mit der gemessenen Geschwindigkeit des Volumenstromes in Übereinstimmung gebracht worden ist. Erst danach beginnt der Dosierungs- und Füllvorgang über die Volumensensoren. Die Erfindung ist vorteilhaft ausgebildet, wenn eine kontinuierliche Messung der Strömungsgeschwindigkeit des aus der Niveaupumpe austretenden Volumenstromes Q vorgenommen wird, während das Füllmedienbad ausgefüllt und der Niveaubehälter stetig überfließend gehalten wird, wobei die Stetigkeit der Überfüllung durch den Vergleich eines Ist-Wertes des Volumenstromes mit einem festliegenden Sollwert erfolgt, über den der Niveaupumpe ein Steuersignal zur Veränderung ihrer Drehzahl und damit ihrer Förderleistung gegeben wird. Mit einem auf der Druckleitung der Niveupumpe angeordneten Sensor wird die Geschwindigkeit Xqv des Volumenstromes Q kontinuierlich gemessen und weiterhin mit einem analogen Wert der Sollgeschwindigkeit verglichen. Der analoge Wert wird als Signal zum Vermindern oder Erhöhen der Drehzahl der Niveaupumpe und damit zu einer Veränderung ihrer Strömungsgeschwindigkeit von der Steuerung an einen Frequenzumrichter des Niveaupumpenantriebes gegeben. Es ist sinnvoll nach der Erfindung, wenn das Signal zum Verändern der Drehzahl und damit für eine veränderte Leistung der Pumpe, als analoges Signal dem Frequenzumrichter mitgeteilt wird. Es ist eine sinnvolle Weiterführung der Erfindung, wenn unter der Bedingung des Nichtvorhandenseins eines Schergefälles des Füllmediums die Niveauregelung im Pufferbehälter sowie eine Konstanthaltung des Füllstandes mittels eines den Füllstand des Pufferbehälters kontinuierlich abtastenden, berührungslos arbeitenden Geschwindigkeitssensors vorgenommen wird. Der Sensor führt die Ist -Werte der Volumenstromgeschwindigkeit einem Sollvergleich zu, welcher bei Feststellung von Wertabweichungen einen Steuerimpuls auslöst, mit dem die Pumpendrehzahl verändert und die Fördermenge und -geschwindigkeit, den Füllstand des Behälters revidierend, angepaßt wird. Nach einer Ausbildungsform der erfindungsgemäßen Lösung wird nach Feststellung von Wertabweichungen ein Steuerimpuls ausgelöst und zur Veränderung des Füllstandes des Behälters, der ihm zugeordnete Ventilauslaß in seiner Durchlaßfähigkeit verändert. Ausgebildet ist die Erfindung dadurch, daß die Höhe des Füllstandes des Pufferbehälters durch einen am Füllrohr angeordneten Geschwindigkeitssensor gemessen wird, der bei Geschwindigkeitsdifferenzen des Volumenstromes Q zum Sollwert aktiviert wird. Es ist eine Ausbildungsform der Erfindung, wenn mit dem als analogen Geschwindigkeitssensor ausgebildeten Sensor, nach der Messung der Strömungsgeschwindigkeit QV des Volumenstromes Q im zugeordneten analogen Regler, ein Vergleich des gemessenen Wertes der Strömungsgeschwindigkeit QV, mit dem Sollwert Wqv vorgenommen wird, wonach eine Stellgröße Uqv als Dauersignal ausgegeben, und dem Sollwert der Strömungsgeschwindigkeit, für das Halten einer konstanten Drehzahl und -Leistung des Pumpenantriebes, angeglichen wird. Die Erfindung ist weiterhin ausgebildet, wenn zur Veränderung der Viskosität der Füllmedien, sowie zur Einhaltung ihrer gleichmäßigen Konstanz das Füllmedium zwischen dem Pufferbehälter und dem Niveaubehälter in einem angepaßten Zeitabstand vor dem Füllvorgang und in den Füllpausen kontinuierlich umgepumpt wird. Nach einer weiteren Ausübungsform ist es vorteilhaft, daß zur Einhaltung einer konstanten Viskosität, bei Vorliegen des Endwertes eines Schergefälles des Füllmediums, der Pumpenantrieb der Füllpumpe in Bewegung gehalten wird, ohne jedoch die Flüssigkeit weiterzupumpen.

Die Erfindung soll an Hand eines Ausführungsbeispieles näher erläutert werden. In der zugehörigen Zeichnung zeigen:
- Fig. 1:: Die Durchführung des Verfahrens mit einen Füllautomaten beim Einfüllen von Medien mit einem Schergefälle
- Fig. 2:: Die Durchführung des Verfahrens mit einem Füllautomaten beim Einfüllen von Medien ohne Schergefälle
- Fig. 3:: Eine Darstellung des Verfahrensablaufes gem. Fig. 1
- Fig. 4:: Eine Darstellung des Verfahrensablaufes gem. Fig. 2

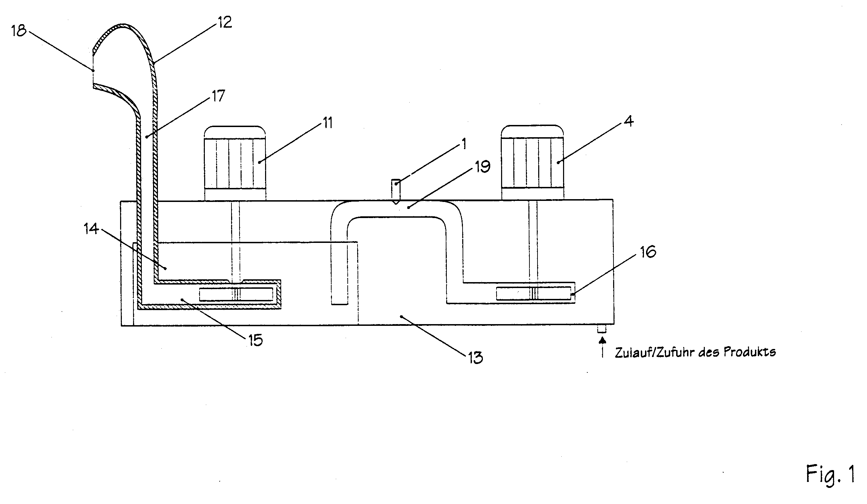

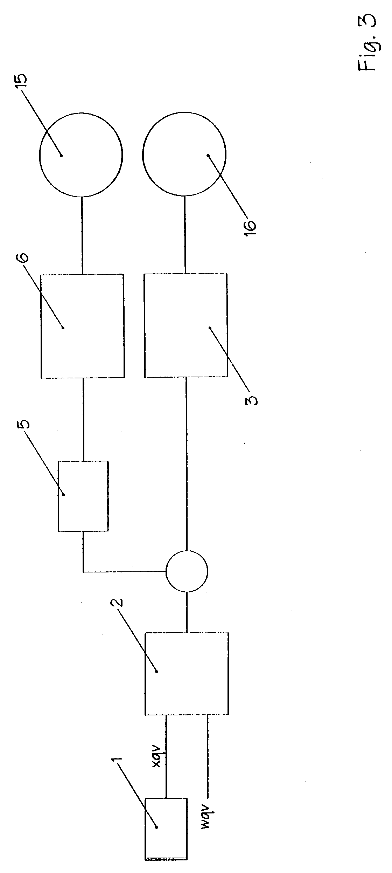

Nach Fig. 1 ist ein Füllautomat aus einem Pufferbehälter 13, einem Niveaubehälter 14, einer Niveaupumpe 16 mit angeschlossener Druckleitung 19, die zum Boden des Niveaubehälters 14, einer Füllpumpe 15 mit angeschlossenem aufsteigendem Füllrohr 12, gebildet, an dem zwei Volumensensoren 17;18 vorgesehen sind. Der Volumensensor 17 ist im Füllrohr 12 angeordnet und befindet sich in der Richtung des Volumenstromes vor dem an der AustrittsÖffnung vorgesehenen Volumensensor 18.
Auf der Druckleitung 19 ist am höchsten Punkt ein Strömungsgeschwindigkeitssensor 1 angeordnet.
Das Auslaßende des aufsteigenden Füllrohres 12 ist so gestaltet, daß der Füllstrahl des abzufüllenden Mediums frei und sicher in die Füllöffnung des zu füllenden Gebindes fließt und ein sauberes und nachtropffreies Abfüllen gewährleistet, wenn das Füllmedium am Austritt eine vorgegebene Sollgeschwindigkeit aufweist.
Diese Sollgeschwindigkeit wird medienabhängig mit unterschiedlichen Drehzahlen der Füllpumpe 15;23, d.h. mit verschiedenen Ausgangsfrequenzen des Frequenzumrichters 10 erreicht. Die Sollgeschwindigkeit für das Befüllen von z.B. 750 ml Dosen mit Latex-Bindemittel wird bei einer Ausgangsfrequenz von ca. 28 Hz erreicht. Für das Befüllen der gleichen Dosengröße mit Latex - Weiß wird, um die benötigte gleiche Sollgeschwindigkeit zu erreichen, eine Ausgangsfrequenz von ca. 38 Hz benötigt. Diese Werte sind noch abhängig davon, ob die Farbe gerade fertig wurde und intensiv gerührt worden ist,und bei welcher Lagertemperatur bzw. wie lange die Farbe bzw. das Abfüllgut gelagert wurde. Dies sind alles Einflußfaktoren, denen zum Erreichen einer vorgegebenen Sollgeschwindigkeit nur durch eine automatische Anpassung der Pumpendrehzahl begegnet werden kann. Andernfalls ist es nötig, vor dem Beginn des Abfüllens die Geschwindigkeit des Füllstrahles manuell einzuregeln. Dieser Einregelvorgang ist zeitaufwendig und Produktverluste durch Bedien- und Eingabefehler sind nicht auszuschließen.
Deshalb wird in Übereinstimmung mit Fig. 3 nach Fig. 1 auf der Druckleitung 19 der Strömungsgeschwindigkeitssensor 1 zur Messung der Strömungsgeschwindigkeit Qv angeordnet. Der Sensor 1 mißt die Strömungsgeschwindigkeit Qv ständig. Der Meßwert Xqv als Ist-Wert der Strömungsgeschwindigkeiten Qv wird in einen Qv-Regler 2 eingelesen und mit einem Soll-Wert Wqv verglichen. Stimmen die Soll- und Ist-Werte überein, erfolgt keine Veränderung in einem Frequenzumrichter 3 und keine Drehzahländerung in Niveaupumpenantrieb 4.
Weichen die Soll- und Ist-Werte voneinander ab, wird ein Spannungssignal Uqv als Stellgröße der Qv-Regelung an den Frequenzumrichter 3 ausgegeben und die Drehzahl des Niveaupumpenantriebes 4 so lange verändert, bis die benötigte Strömungsgeschwindigkeit am Volumensensor 17 eingestellt ist. Dann wird das Spannungsausgangssignal Uqv im Verstärker 5 parametriert, als Stellgröße an den Frequenzumrichter FU 2 ausgegeben und damit beim Füllstart am Füllpumpenantrieb 11 wirksam. Drehzahlveränderungen während einer Füllung werden durch das Regime des Steuerprogrammes nicht zugelassen, gleichfalls können Frequenzveränderungen nur während der Füllpausen vorgenommen werden. Dazu ist das Verfahren in seinen Schritten so eingestellt, daß die Niveaupumpe 16 für ein bestimmtes Füllmedium mit bekannter Viskosität und Dichte, z.B. eine Geschwindigkeit Xqv von 96 cm/s erzeugt. Die Sollwertvorgabe, Geschwindigkeitssollwert Wqv ist 1,5 m/s.
Im Qv-Regler 2 erfolgt nach Fig. 3 ein Spannungsabgleich. Dabei wird ein Spannungswert von z.B. 5 V an den Frequenzumrichter FU 1 ausgegeben und die Ausgangsfrequenz so vergrößert, daß die Drehzahl der Niveaupumpe 16 auf die erforderliche Enddrehzahl von z.B. 900 U/min erhöht wird. Ein gemessener Spanrungswert von z. B. 5 V wird im Verstärker 5 parametriert und an den Frequenzumrichter 6 ausgegeben. Die Verstärkung bzw. Parametrierung ist erforderlich, weil das Füllrohr 12 der Füllpumpe 15 eine Höhe von 30 bis 50 cm bis zum Füllrohrende aufweist. Die Füllpumpe 15 gleicht auch die scheinbare Zunahme der geodätischen Förderhöhe im Füllrohr 12 bei höheren Dichten der Flüssigkeit derart aus, daß immer mit der benötigten Strömungsgeschwindigkeit Qv gefüllt wird. Dieser Ausgleich ist erforderlich, weil bei einer gewählten Pumpenleistung und einem bekannten Füllrohrquerschnitt ein Volumenstrom Q von mindestens 1 l/s erzeugt werden soll. Die Enddrehzahl des Füllpumpenantriebs 11 wird beim beispielsweise gewählten Frequenzumrichter 6 nach ca. 0,1 s erreicht. Der Volumensensor 17 darf erst dann aktiviert werden, wenn die Füllpumpe 15 sicher die erforderliche Drehzahl für die benötigte Sollgeschwindigkeit erreicht hat.

Mitt der Regelung der Geschwindigkeit des Medienstromes und dessen Anpassung an einen Sollwert werden folgende Verfahrensschritte im Ergebnis transparent:
1. Die Geschwindigkeit und Lage des Füllstrahles wird automatisch durch die Geschwindigkeitsmessung eingeregelt, damit erfolgt durch einen ständig gerichteten Füllstrahl ein nachtropf- und spritzfreies Einfüllen des Füllmediums in die Behälter.
2. Die Genauigkeit der Füllung wird erhöht, da durch die automatische Geschwindigkeitsregelung eine höhere Konstanz des Niveaus des Füllmediums in Niveaubehälter 14 erzielt wird.
3. Fehlfüllungen, die durch Fehler bei der manuellen Eingabe der Werte für den Frequenzumrichter 6 auftreten können, werden verhindert.

Gemäß Fig. 1 wird nach den Einschalten der Volumenfüllanlage beim Abschluß des Füllvorganges des Pufferbehälters 13 die Niveaupumpe 16 gestartet. Der von der Niveaupumpe 16 erzeugte Volumenstrom füllt den im Pufferbehälter 13 angeordneten Niveaubehälter 14. Der von der Niveaupumpe 16 erzeugte Volumenstrom bewirkt ein kontinuierliches, allseitiges Überfließen des zu füllenden Produktes über die Kanten des im Pufferbehälter 13 angeordneten Niveaubehälters 14. Der Niveaubehälter 14 ist so eingeordnet, daß das überfließende Produkt allseitig über seine Kanten abfließen kann. Der Abstand zu den begrenzenden Wandungen des Pufferbehälters 13 sollte nicht kleiner sein als 1 cm, um ein freies, allseitiges Überfließen des Mediums auch bei höheren Viskositäten nicht zu behindern. Der von der Niveaupumpe 16 erzeugte Volumenstrom wird über eine Druckleitung 19 zum Boden des Niveaubehälters 14 geleitet. Auf der Druckleitung 19 ist ein analoger Geschwindigkeitssensor 1 angeordnet. Der Sensor 1 ist für die Messung der Strömungsgeschwindigkeiten im Bereich von 0 - 300 cm/s ausgelegt. Der Geschwindigkeitssensor 1 mit in Übereinstimmung mit Fig. 3 kontinuierlich den Ist-Wert der Strömungsgeschwindigkeit Xqv, die im Qv-Regler 2 mit der Soll-Wert-Vorgabe der Strömungsgeschwindigkeit Wqv verglichen wird. Der Meßwert Xqv ist ein analoger Spannungswert, er kann je nach Geschwindigkeit eine Spannungsgröße von 0 - 10 V annehmen. Allen analogen Spannungsgrößen ist eine Strömungsgeschwindigkeit zugeordnet.
Die Niveaupumpe 16 erzegt für ein bestimmtes Füllmedium mit bekannter Viskosität und Dichte, z. B. eine Geschwindigkeit Xqv Von 96 cm/s. Die Sollwertvorgabe, Geschwindigkeitssollwert Wqv, ist 1,5 m/s.
Im Qv-Regler 2 erfolgt nach Fig. 3 ein Spannungsabgleich, dabei wird ein Spannungswert von z. B. 5 V an den Frequenzumrichter FU 1 ausgegeben und die Ausgangsfrequenz so vergrößert, daß die Drehzahl der Niveaupumpe 16 auf die erforderliche Enddrehzahl von z. B. 900 U/min. erhöht wird. Ein gemessener Spannungswert von z. B. 5 V wird im Verstärker 5 parametriert und an den Frequenzumrichter 6 ausgegeben. Die Verstärkung bzw. Parametrierung ist erforderlich, weil das Füllrohr 12 der Füllpumpe 15 eine Höhe von 30 - 50 cm bis zum Füllrohrende aufweist. Die Füllpumpe 15 gleicht auch die scheinbare Zunahme der geodätischen Förderhöhe im Füllrohr bei höheren Dichten der Flüssigkeit derart aus, daß immer mit der benötigten Strömungsgeschwindigkeit Qv gefüllt wird. Dieser Ausgleich ist erforderlich, weil bei einer gewählten Pumpenleistung und einem vorhandenen Füllrohrquerschnitt ein Volumenstrom Q von mindestens 1 l/s erzeugt wird. Die Enddrehzahl des Füllpumpenantriebs 11 wird beim beispielsweise gewählten Frequenzumrichter 6 nach ca. 0,1 s erreicht. Der Volumensensor 17 darf erst dann aktiviert werden, wenn die Füllpumpe 15 sicher im Bereich der stationären Strömung arbeitet. Deshalb wird der Volumensensor 17 so über dem Füllstand des Niveaubehälters 14 angeordnet, daß mit Sicherheit die Meßstrecke für das gesamte Grundvolumen erst dann zwischen den Volumensensoren 17;18 aktiviert wird, wenn Geschwindigkeitsveränderungen des Volumenstrom Q ausgeschlossen sind.
Die Anordnung nach den Figuren 1 und 3 wird dann gewählt, wenn viskose Füllmedien mit Schergefälle abgefüllt werden. Dispersionen weisen ein ausgeprägtes Schergefälle auf. Als Beispiel soll Latex-Bindemittel genannt werden.

Die Viskosität wird hier von einem Anfangswert von z.B 10 000 m Psc durch Rühren auf einen Viskositätswert von ca. 1.000 m Psc abgebaut. Wird das Rühren unterbrochen, steigt der Viskositätswert rasch wieder an. In der Füllpumpe 15 erfolgt in den Füllpausen, bei Stillstand des Pumpenläufers, ein Wiederanstieg der Viskosität. Um den Wiederanstieg der Viskosität zu verhindern, wird sofort nach Pumpenstillstand der Pumpenläufer der Pumpen 15;16 mit einer Drehzahl beaufschlagt, die so gewählt ist, daß sie unterhalb seiner förderwirksamen Drehzahl bleibt.
Die Höhendifferenz des Füllgutes im Pufferbehälter 13, zwischen Niveaupumpe 16 und der Überlaufkante des Niveaubehälters 14 im Pufferbehälter 13, ist gering. Der Niveauunterschied zwischen Niveaubehälter 14 und dem Füllgutniveau im Pufferbehälter 13 beträgt im allgemeinen 2 bis 3 cm. Hier kann also mit der baugleichen Niveaupumpe 16 mit geringeren Drehzahlen ein höherer Volumenstrom Q erzeugt werden.
Werden Medien abgefüllt, die kein Schergefälle besitzen, kann auf die Überlaufanordnung nach Fig. 1 verzichtet werden, da hierbei durch Rühren keine Viskositätveränderungen auftreten.

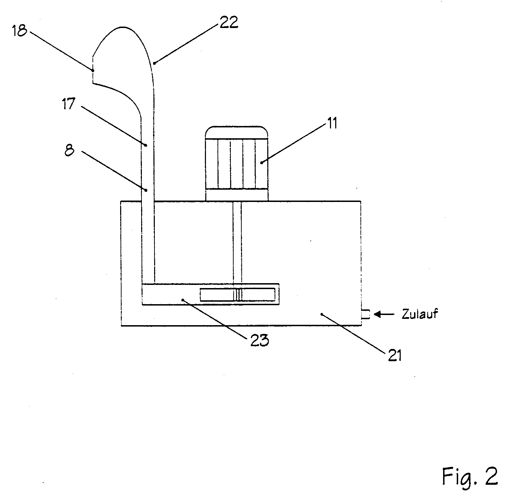

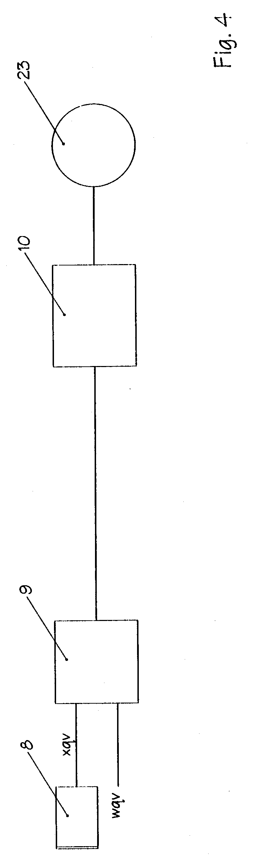

In den Figuren 2 und 4 soll das zugehörige Verfahrensregime näher erläutert werden.
Gemäß Fig. 2 wird die Füllpumpe 23 direkt im Pufferbehälter 21 angeordnet. An Füllrohr 22 sind in aufsteigender Richtung des Volumenstromes zuerst ein Geschwindigkeitssensor 8 und darüber die Volumensensoren 17;18 angeordnet.
Wie in Fig. 4 dargestellt, mißt der Strömungsgeschwindigkeitssensor 8 den Anstieg des Volumenstromes Q, der durch die Erhöhung der Pumppendrehzahl bewirkt wird. Im Qv-Regler 9 wird die gemessene Strömungsgeschwindigkeit mit dem Sollwert Wqv verglichen und die gebildete Stellgröße Uqv wird unmittelbar an den Frequenzumrichter 10 am Füllpumpenantrieb 11' ausgegeben. Ist die Sollgeschwindigkeit Wqv erreicht, erfolgt eine Begrenzung der Ausgangsfrequenz des Frequenzumrichters 10 und damit keine Erhöhung der Pumpendrehzahl. Die Abstände zwischen dem die Strömugsgeschwindigkeit messenden Sensors 8 und dem Volumensensor 17 sind so gewählt, daß die stationäre Strömung nach einem Soll-/Ist-Werte-Vergleich und Einregelung des Sollwertes sowie Verstellung der Pumpendrehzah erreicht ist, bevor der Volumensensor 17 aktiviert wird. Dabei ist zu beachten, daß über eine separate Niveauregelung die Konstanthaltung des Niveaus im Pufferbehälter 21 gewährleistet ist. Damit wird geregelt, daß eine notwendige Füllgeschwindigkeit erreicht wird und Niveauschwankungen, die zu einer Veränderung der Strömungsgeschwindigkeit Qv führen würden, ausgeschlossen sind. Die nachlaufende Füllpumpe 23 erzeugt einen ansteigenden Füllstrom, der vom Sensor 8 gemessen wird. Wird auf den Volumensensor 17 verzichtet und die vom Sensor 8 gemessene Strömungsgeschwindigkeit zur Einregelung der Pumpendrehzahl benutzt, so wird die Pumpendrehzahl so lange erhöht, bis der Soll-Ist-Wert-Vergleich ergibt, daß der Füllstrom die Sollgeschwindigkeit, die ein nachtropf- und spritzfreies Füllen ermöglicht, erreicht hat. Der erreichte Sollwert wird eingespeichert und gehalten und nicht mehr verändert. Der analoge Meßwert der Strömungsgeschwindigkeit wird in eine durchflußproportionale Impulsfolge umgewandelt. Geschwindigkeitsschwankungen durch geringe Niveauänderungen im Füllbehälter 13 werden durch Änderung der Impulsfolge erfaßt und automatisch kompensiert. Tritt das Füllmedium aus dem Füllkopf aus, wird der Sensor 18 geschaltet. Dieses Schaltsignal ist das Startsignal der Impulszählung zur Volumenmessung. Nach der Zählung der für das Sollvolumen erforderlichen Impulsfolge wird der Füllpumpenantrieb 11 gestoppt.

### Aufstellung der verwendeten Bezugs zeichen

- **1**: Geschwindigkeitssensor
- **2**: Regler Qv
- **3**: Frequenzumrichter
- **4**: Pumpenantrieb
- **5**: Verstärker
- **6**: Frequenzumrichter
- **8**: Geschwindigkeitssensor
- **9**: Regler
- **10**: Frequenzumrichter
- **11;11'**: Füllpumpenantrieb
- **12;22**: Füllrohr
- **13;21**: Pufferbehälter
- **14**: Niveau behälter
- **15;23**: Füllpumpe
- **16**: Niveaupumpe
- **17**: Volumensensor
- **18**: Volumensensor
- **19**: Druckleitung
- **20**: Pumpenläufer
- **Q**: Volumenstrom
- **Qv**: Strömungsgeschwindigkeit
- **Xqv**: Istwert der Strömungsgeschwindigkeit
- **Wqv**: Sollwert der Strömungsgeschwindigkeit
- **Uqv**: Stellgröße Qv-Regelung (Spannung: 0 ... 10 V)
- **FU 1**: Frequenzumrichter Niveaupumpe
- **M 1**: Elektroantrieb Niveaupumpe
- **FU 2**: Frequenzumrichter Füllpumpe
- **M 2**: Elektroantrieb Füllpumpe

## Patentansprüche

1. Verfahren zum Justieren des Füllstrahles förderstromgesteuerter, automatisch arbeitender Füllmaschinen, mit denen Flüssigkeiten unterschiedlicher Viskosität und Dichte dosiert und mit einem frei verlaufenden, gerichteten Füllstrahl in Gefäße gefüllt werden, die Flüssigkeit mittels einer Füllpumpe (15) in ein Füllrohr (12) gepumpt wird, wobei die Flüssigkeit in dem Füllrohr (12) aufsteigend, zwischen darin angeordneten Sensoren zur Bestimmung eines Grundvolumens in Zeitabschnitten gemessen, die Zuführung einer gleichmäßigen Flüssigkeitsmenge für den aufsteigenden Zulauf im Füllrohr (12) durch das Einordnen eines Überlaufes aus einem Niveaubehälter (14) erhalten, und die Zeit zum Ausfüllen des Füllrohres (12), beginnend beim Füllstart in Zeiteinheiten eingeteilt, beim Austritt aus dem Füllrohr (12) beendet wird, wobei die Basis zum Ausfüllen des Volumens des Füllrohres (12) durch die Überlaufanordnung des Niveaubehälters (14), verbunden mit einer stetigen Messung der Viskosität der Flüssigkeit, immer konstant gehalten wird, und aus dem, in einem Pufferbehälter (13) angeordneten Niveaubehälter (14) das Füllrohr (12) ragt, wobei der Niveaubehälter (14) sowie die Füllpumpe (15) einem gemeinsamen Füllmedienbad zugeordnet werden, der Niveaubehälter (14) zum Erzielen eines kontinuierlichen Kreislaufes stetig überfüllt gehalten wird, sowie am aufragenden Ende des Füllrohres (12) eine durch die Sensoren (17;18) gebildete Schranke, über ein Steuersignal mit einer Steuervorrichtung in Verbindung gebracht ist, die über ein Ausgangssignal vor einem Schaltverstärker vorgesehen und verstärkend mit der Füllpumpe verbunden wird, die Steuervorrichtung mit einem Positionssensor (17) über ein Steuersignal in eine Wirkverbindung gebracht wird, und der Niveaubehälter (14) in dem Pufferbehälter (13) angeordnet, die Möglichkeit eröffnet, mit einer Niveaupumpe (16) einen ständigen Kreislauf druckseitig mit dem Niveaubehälter (14) und saugseitig am Pufferbehälter (13) in Verbindung zu erhalten und im Füllrohr (12) in einem bestimmten Abschnitt die zwei Sensoren (17;18) übereinander angeordnet gleichzeitig durch den Abschnitt zwischen den beiden Sensoren (17;18) ein bestimmtes Füllvolumen festgelegt wird, **dadurch gekennzeichnet,** daß die Geschwindigkeit des aus dem Füllrohr (12) austretenden Füllstrahles als Sollwert festgelegt sowie gespeichert wird und die Ist-Werte der Geschwindigkeit eines aus der Niveaupumpe (16) austretenden Volumenstromes mit einem Geschwindigkeitssensor (1) gemessen und miteinander zur Justierung der Geschwindigkeit des austretenden Füllstrahles einem Vergleich unterzogen werden, wobei die Förderleistung der Niveaupumpe (16) solange verändert wird, bis die Größe des gespeicherten Soll-Wertes der Geschwindigkeit des Füllstrahles am Volumensensor (17;18), mit der am Geschwindigkeitssensor (1) gemessenen Geschwindigkeit des Volumenstromes in Übereinstimmung gebracht worden ist und erst danach der Füllvorgang in die Gefäße eingeleitet wird.

2. Verfahren nach Anspruch 1, **dadurch gekennzeichnet,** daß eine kontinuierliche Messung der Strömungsgeschwindigkeit des aus der Niveaupumpe (16) austretenden Volumenstromes vorgenommen wird, während das Füllmedienbad gefüllt und der Niveaubehälter (14) stetig überfließend gefüllt gehalten wird, wobei die Stetigkeit des Volumenstromes konstant gehalten wird, daß mit einem auf der Druckleitung der Niveaupumpe (16) angeordneten Sensor (1) die vorhandene Geschwindigkeit Qv des Volumenstromes Xqv kontinuierlich gemessen, und mit einem analogen Wert der Sollgeschwindigkeit verglichen wird und als Signal zum Vermindern oder Erhöhen der Drehzahl der Niveaupumpe (16) zur Veränderung der Strömungsgeschwindigkeit von der Steuerung an einen Frequenzumrichter (10) des Niveaupumpenantriebes (4) gegeben wird.

3. Verfahren nach Anspruch 1 und 2, **dadurch gekennzeichnet,** daß das Signal zum Verändern der Drehzahl als analoges Signal dem Frequenzumrichter (10) mitgeteilt wird.

4. Verfahren zum Justieren des Füllstrahles förderstromgesteuerter, automatisch arbeitender Füllmaschinen, mit denen Flüssigkeiten unterschiedlicher Viskosität und Dichte dosiert und mit einem frei verlaufenden, gerichteten Füllstrahl in Gefäße gefüllt werden, die Flüssigkeit mittels einer Füllpumpe (23) in ein Füllrohr (22) gepumpt wird, wobei die Basis zum Ausfüllen den Volumens des Füllrohres durch eine Niveauregelung in einem Pufferbehälter (21) immer konstant gehalten wird und die Flüssigkeit in dem Füllrohr (22) aufsteigend, zwischen darin angeordneten Sensoren zur Bestimmung eines Grundvolumens in Zeitabschnitten gemessen, und die Zeit zum Ausfüllen des Füllrohres (22), beginnend beim Füllstart in Zeiteinheiten eingeteilt, beim Austritt aus dem Füllrohr (22) beendet wird, und dazu am aufragenden Ende des Füllrohres (22) eine durch die Sensoren (17;18) gebildete Schranke, über ein Steuersignal mit einer Steuervorrichtung in Verbindung gebracht ist, die über ein Ausgangssignal vor einem Schaltverstärker vorgesehen und verstärkend mit der Füllpumpe (23) verbunden wird, die Steuervorrichtung mit einem Sensor (17) über ein Steuersignal in eine Wirkverbindung gebracht wird, und im Füllrohr (22) in einem bestimmten Abschnitt die zwei Sensoren (17;18) übereinander angeordnet sind, wobei gleichzeitig durch den Abschnitt zwischen den beiden Sensoren (17;18) ein bestimmtes Füllvolumen festgelegt wird, **dadurch gekennzeichnet,** daß die Niveauregelung im Pufferbehälter (21), sowie die Konstanthaltung des Füllstandes, mittels, eines den Füllstand des Pufferbehälters (21) kontinuierlich abtastenden, berührungslos arbeitenden Geschwindigkeitssensors (8) vorgenommen wird, der die gemessenenen Werte einem Sollwertvergleich zuführt, der bei Feststellung von Wertabweichungen einen Steuerimpuls auslöst, mit dem die Pumpendrehzahl verändert und die Fördermenge sowie -geschwindigkeit dem Sollbedarf angepaßt werden.

5. Verfahren nach den Ansprüchen 1 und 2, **dadurch gekennzeichnet,** daß nach der Feststellung von Wertabweichungen des Volumenstromes ein Steuerimpuls ausgelöst und zur Veränderung des Füllstandes des Behälters (14), ein Ventildurchlaß in seiner Durchlaßfähigkeit verändert wird.

6. Verfahren nach Anspruch 4, **dadurch gekennzeichnet,** daß der Füllstand des Pufferbehälters (21) durch einen am Füllrohr (22) angeordneten Geschwindigkeitssensor (8) gemessen, und die Geschwindigkeitsdifferenz des Volumenstromes zum Füllstand des Behälters (21) in ein Verhältnis gebracht und ausgeglichen wird.

7. Verfahren nach Anspruch 1;3 und 5, **dadurch gekennzeichnet,** daß mit dem als analogen Geschwindigkeitssensor (1) ausgebildeten Sensor nach der Messung der Strömungsgeschwindigkeit Qv des Volumenstromes Q, im zugeordneten analogen Regler, ein Vergleich des gemessenen Wertes der Strömungsgeschwindigkeit Qv mit dem Soll-Wert Wqv vorgenommen wird, wonach die Stellgröße Uqv als Dauersignal ausgegeben und dem Sollwert der Strömungsgeschwindigkeit, für das Halten einer konstanten Drehzahl des Pumpenantriebes (4), angeglichen wird.

8. Verfahren nach Anspruch 1;3 und 7, **dadurch gekennzeichnet,** daß zur Verminderung der Viskosität der Flüssigkeiten mit einem Schergefälle und der Einhaltung ihrer konstanten Viskosität, die Flüssigkeit zwischen dem Pufferbehälter (13) und dem Niveaubehälter (14) in einem angepaßten Zeitabstand vor dem Füllvorgang und in den Füllpausen kontinuierlich umgepumpt wird.

9. Verfahren nach Anspruch 4 **dadurch gekennzeichnet,** daß zur Einhaltung einer konstanten Viskosität, bei Vorliegen eines Endwertes des Schergefälles der Flüssigkeit, der Pumpenantrieb (11) der Füllpumpe (23) des Pufferbehälters (21) aktiviert und ohne zu Pumpen in Bewegung gehalten wird.

## Claims

1. A procedure for adjusting the filling jet of flow-controlled automatic filling machines, used for dosing liquids of various viscosities and densities and filling them with a free-flowing directed filling jet into vessels, with the liquid being pumped by means of a filling pump (15) into a filling pipe (12), in which the liquid rises in the filling pipe (12) between internal sensors, to determine a basic volume measured at intervals, which receives a consistent liquid quantity for the rising flow in the filling pipe (12) due to the arrangement of an overflow from a leveling container (14) and in which the time for filling pipe (12) is divided into time units commencing with the filling start and finishing upon medium emerging from the filling pipe (12) in which the basis for filling the volume of the filling pipe (12) is kept constant by the over-flow arrangement of the leveling container (14) and a consistent measurement of the viscosity of the liquid and in which the filling pipe (12) rises from the leveling container (14) arranged in a buffer container (13), in which the leveling container (14) as well as the filler pump (15) are assigned to a mutual filling medium bath with the leveling container (14) overflowing at all times to achieve a continuous circuit and a barrier formed by the sensors (17;18) at the rising end of the filling pipe (12) being connected by a control signal to a control device provided by an output signal of a switching amplifier and having an amplified connection with the filler pump, in which the control device is brought into an operative connection with a position sensor (17) via a control signal and the leveling container (14) in the buffer container (13) offers the option to achieve a continuous circuit by means of a leveling pump (16) on the pressurized side with the leveling container (14) and with the buffer container (13) on the suction side and in which a certain filling volume is determined by the two sensors (17;18) arranged above one another at a certain distance in the filling pipe (12) and at the same time by the distance between the two sensors (17;18), **characterized in that**, the speed of the filling jet emerging from the filling pipe (12) is determined and stored as a set value and that the actual value of the speed of a volume flow emerging from the leveling pump (16) is measured by a speed sensor (1) for comparison to adjust the speed of the emerging filling jet and with the output of the leveling pump (16) being changed until the stored set value of the filling jet speed at the volume sensor (17;18) corresponds with the volume flow speed measured at the speed sensor (1) and that only at this point the filling into the vessels is started.

2. A procedure according to claim 1, **charcterized in that**, a continuous flow speed measurement of the volume flow emerging from the leveling pump (16) is carried out whilst the filling medium bath is kept full and the leveling container (14) overflowing at all times, with the volume flow being maintained at a constant level, that a sensor (1) on the pressure line of the leveling pump (16) continuously measures the existing speed Qv of the volume flow Xqv and compares this to an analogue value of the set speed and that this is output as a signal from the control to the frequency converter (10) of the leveling pump drive (4) to decrease or increase the speed of the leveling pump (16) for changing the flow speed.

3. A procedure according to claim 1 and 2 **characterized in that**, the signal for changing the speed is passed to the frequency converter (10) as an analogue signal.

4. A procedure for adjusting the filling jet of flow-controlled automatic filling machines, used for dosing liquids of various viscosities and densities and filling them with a free-flowing directed filling jet into vessels, with the liquid being pumped by means of a filler pump (23) into a filling pipe (22), in which the basis for filling the volume of the filling pipe is kept constant at all times by means of a liquid level control arranged in a buffer container (21) and in which the liquid rises in the filling pipe (22) between internal sensors to determine a basic volume measured at intervals, and in which the time for filling the filling pipe (22) is divided into time units commencing with the filling start and finishing upon medium emerging from the filling pipe (22) and for this purpose a barrier formed by the sensors (17;18) at the rising end of the filling pipe (22) being connected by a control signal to a control device provided by an output signal of a switching amplifier and having an amplified connection with the filler pump (23), in which the control device is brought into an operative connection with a sensor (17) via a control signal and in which a certain filling volume is determined by the two sensors (17;18) arranged above one another at a certain distance in the filling pipe (22) and at the same time by the distance between the two sensors (17;18), **characterized in that**, the level control in the buffer container (21) and the maintenance of a constant filling level is achieved by a contactless speed sensor (8), continuously monitoring the filling level of the buffer container (21) and passing the measured values to a set value comparison, triggering a control pulse in case of a deviation, used for adapting the pump speed, the flow quantity and speed to the set requirement.

5. A procedure according to claims 1 and 2 **characterized in that**, a control pulse is triggered after the determination of a value deviation of the volume flow and that the size of a valve opening is modified to change the filling level of the container (14).

6. A procedure according to claim 4, **characterized in that**, the filling level of the buffer container (21) is measured by a speed sensor (8) arranged on the filling pipe (22) and that the speed difference of the volume flow is brought into relation with the filling level of the container (21) and adjusted.

7. A procedure according to claims 1; 3 and 5, **characterized in that**, a comparison of the measured value of the flow speed Qv and the set value Wqv is carried out with the sensor being an analogue speed sensor (1) after measuring the flow speed Qv of the volume flow Q in the assigned analogue regulator, after which the regulated quantity Uqv is output as a continuous signal and the set value of the flow speed is adapted to maintain a constant speed of the pump drive (4).

8. A procedure according to claims 1; 3 and 7, **characterized in that**, the liquid is continuously repumped between the buffer container (13) and the leveling container (14) in an adapted interval before the filling process and in the filling breaks to decrease the viscosity of liquids with a shear ratio and to maintain their constant viscosity.

9. A procedure according to claim 4, **characterized in that**, the pump drive (11) of the buffer container (21) filler pump (23) is activated and kept moving without pumping, in order to maintain a constant viscosity in case of a final value of the shear ratio of a liquid being available.

## Revendications

1. Procédé pour l'égalisation du jet de remplissage de remplisseuses mécaniques à débit d'alimentation à fonctionnement automatique, avec lesquelles des liquides de différentes densités et viscosités sont dosés et versés dans des récipients au moyen d'un jet de remplissage à écoulement libre orienté, le liquide pompé dans un tube de remplissage (12) par une pompe de remplissage (15), le liquide montant alors dans le tube de remplissage (12) entre des capteurs disposés à l'intérieur pour la détection d'un volume de base mesuré en intervalles de temps, maintenant l'alimentation uniforme d'un volume constant de liquide pour l'amenée ascendante du tube de remplissage (12) grâce à l'installation du trop-plein d'un récipient à niveau (14), le temps de remplissage de volume du tube de remplissage (12), divisé en unités temporelles, commençant au début du remplissage et se terminant à la sortie hors du tube de remplissage (12), la base de remplissage de volume du tube de remplissage (12) étant toujours maintenue constante par la disposition du trop-plein du récipient à niveau (14) relié à une mesure permanente de viscosité du liquide, et le tube de remplissage (12) sortant d'un récipient à niveau (14) disposé dans un récipient-tampon (13), le récipient à niveau (14) ainsi que la pompe de remplissage (15) étant affectés à un bain d'agent de remplissage commun, le récipient à niveau (14) maintenu constamment trop plein afin d'obtenir un circuit continu, et une barrière photoélectrique formée par des capteurs (17;18) à l'extrémité saillante du tube de remplissage (12), communiquant par un signal de commande avec un dispositif de commande, lequel est prévu avec un signal de sortie devant un amplificateur de commande et relié avec amplification à la pompe de remplissage, le dispositif de commande étant en contact actif avec un capteur de position (17) par un signal de commande, et le récipient à niveau (14) disposé dans le récipient-tampon (13) ouvrant la possibilité de maintenir avec une pompe à niveau (16) un circuit continu avec le récipient à niveau (14) du côté de la production de pression, et sur le récipient-tampon (13) du côté de l'aspiration, et où les deux capteurs (17;18) sont disposés l'un au-dessus de l'autre à un certain intervalle dans le tube de remplissage (12), un volume de remplissage défini étant simultanément déterminé par ledit intervalle entre les deux capteurs (17;18), **caractérisé en ce que** la vitesse du jet de remplissage sortant du tube de remplissage (12) est fixée et mémorisée comme valeur de consigne et que les valeurs de vitesse effectives d'un flux volumétrique sortant de la pompe à niveau (16) sont mesurées avec un détecteur de vitesse (1) et réciproquement soumises à comparaison pour l'égalisation de vitesse du jet de remplissage produit, le débit de la pompe à niveau (16) étant alors modifié jusqu'à ce que la grandeur de valeur de consigne mémorisée du jet de remplissage sur le capteur de volume (17;18) corresponde à la valeur de vitesse du flux volumétrique mesurée sur le détecteur de vitesse (1), le processus de remplissage des récipients n'étant déclenché qu'ensuite.

2. Procédé selon revendication 1 , **caractérisé en ce qu'**une mesure continue de la vitesse d'écoulement du flux de volume sortant de la pompe à niveau (16) est effectuée, pendant que le bain d'agent de remplissage est rempli et que le récipient à niveau (14) est constamment maintenu trop plein, la continuité du flux volumétrique étant alors maintenue en permanence, et en ce que la vitesse effective Qv du flux volumétrique Xqv est constamment mesurée au moyen d'un détecteur (1) disposé sur la conduite de pression de la pompe à niveau (16), comparée à une valeur analogue de vitesse de consigne, et transmise par la commande à un redresseur de fréquence (10) du moteur de pompe à niveau (4) comme signal de diminution ou d'accroissement de vitesse de la pompe à niveau (16), en vue de modifier la vitesse d'écoulement.

3. Procédé selon revendications 1 et 2, **caractérisé en ce que** le signal de modification de vitesse est transmis au redresseur de fréquence (10) en tant que signal analogique.

4. Procédé pour l'égalisation du jet de remplissage de remplisseuses mécaniques à débit d'alimentation à fonctionnement automatique, avec lesquelles des liquides de différentes densités et viscosités sont dosés et versés dans des récipients au moyen d'un jet de remplissage à écoulement libre orienté, le liquide pompé dans un tube de remplissage (22) par une pompe de remplissage (23), le liquide montant alors dans le tube de remplissage (22) entre des capteurs disposés à l'intérieur pour la détection d'un volume de base mesuré en intervalles de temps, la base de remplissage de volume du tube de remplissage étant toujours maintenue constante par la régulation de niveau d'un récipient-tampon (21), le temps de remplissage de volume du tube de remplissage (22), divisé en unités temporelles, commençant au début du remplissage et se terminant à la sortie hors du tube de remplissage (22), une barrière photoélectrique formée par des capteurs (17;18) à l'extrémité saillante du tube de remplissage (22), communiquant à cet effet par un signal de commande avec un dispositif de commande, lequel est prévu avec un signal de sortie devant un amplificateur de commande et relié avec amplification à la pompe de remplissage (23), le dispositif de commande étant en contact actif avec un capteur (17) par un signal de commande, et où les deux capteurs (17;18) sont disposés l'un au-dessus de l'autre à un certain intervalle dans le tube de remplissage (22), un volume de remplissage défini étant simultanément déterminé par ledit intervalle entre les deux capteurs (17;18), **caractérisé en ce que** la régulation de niveau dans le récipient-tampon (21) et le maintien à un niveau constant sont effectuées au moyen d'un détecteur de vitesse (8) lisant de manière continue le niveau de remplissage du récipient-tampon (21) et fonctionnant sans contact, ledit détecteur de vitesse soumettant les valeurs mesurées à une comparaison de valeur de consigne déclenchant une impulsion de commande en cas d'écarts constatés de valeurs, laquelle modifie la vitesse de pompe et fait s'adapter vitesse et débit aux besoins de consigne.

5. Procédé selon revendications 1 et 2, **caractérisé en ce qu'**une impulsion de commande est déclenchée après écarts constatés de flux volumétrique, et que le débit de passage d'une vanne est changé afin de modifier le niveau du récipient (14).

6. Procédé selon revendication 4, **caractérisé en ce que** le niveau de remplissage du récipient-tampon (21) est mesuré par un détecteur de vitesse (8) disposé sur le tube de remplissage (22), que le différente de vitesse du flux volumétrique est mis en rapport avec le niveau du récipient (21), puis égalisé.

7. Procédé selon revendications 1; 3 et 5, **caractérisé en ce qu'**une comparaison de la valeur mesurée de vitesse d'écoulement Qv avec la valeur de consigne Wqv est effectuée au moyen du détecteur formé en tant que détecteur analogique de vitesse (1) après mesure, dans le régulateur analogique affecté, de la vitesse d'écoulement Qv du flux volumétrique Q, à la suite de quoi la variable réglante Uqv est sortie en tant que signal continu et ajustée à la valeur de consigne de la vitesse d'écoulement, pour le maintien d'une vitesse constante de moteur de pompe (4).

8. Procédé selon revendications 1; 3 et 7, **caractérisé en ce que** le liquide est continuellement transvasé entre le récipient-tampon (13) et le récipient à niveau (14) à intervalle temporel adapté avant processus de remplissage et lors des pauses de remplissage, afin de diminuer la viscosité des liquides avec un gradient de cisaillement, et de maintenir leur viscosité constante.

9. Procédé selon revendication 4, **caractérisé en ce que** le moteur de pompe (11) de la pompe de remplissage (23) du récipient -tampon (21) est activé et maintenu en mouvement sans pompage, par présentation d'une valeur finale de gradient de cisaillement du liquide, afin de maintenir une viscosité constante.
